# EUROPEAN PATENT SPECIFICATION

(11) **EP 0 635 420 B1**
(45) Date of publication and mention of the grant of the patent: **02.01.1997**
(21) Application number: 94305360.3
(22) Date of filing: 20.07.1994
(51) Int. Cl.: B62D 43/04

(54) **Winching device**
Hebevorrichtung
Treuil

(30) Priority: 24.07.1993 GB 9315403
(43) Date of publication of application: 25.01.1995
(73) Proprietor: Metallifacture Limited, Redhill Nottingham NG5 8PY (GB)
(72) Inventor: Parvinmehr, Hossein Dr., Duffield, Derbyshire DE3 4DT (GB)
(74) Representative: MacGregor, Gordon

(56) References cited:
- EP-A- 0 491 513
- EP-A- 0 507 032
- GB-A- 1 432 823
- US-A- 4 059 197
- US-A- 4 915 358
- US-A- 4 997 164
- US-E- 33 303

## Description

This invention relates to a winching device particularly, but not exclusively, for a vehicle spare wheel carrying assembly.

In some vehicles it is usual to support a spare wheel beneath the body of the vehicle. The spare wheel is held, in a stowed position, with the tyre pressed against formations of the body, by means of a winching device holding a support cable for the spare wheel under tension. The winching device can be operated, by means of a detachable handle, for example to lower the spare wheel on the cable to an accessible position. The winching device includes a pulley on which the cable is mounted.

Such a winching device is disclosed in GB-A-2251589. In this device the pulley is mounted in a rectangular support casing. It has been found that when there is no load on the cable the inherent resilience of the cable results in at least some turns thereof expanding and filling the gap between the pulley and the support casing with the result that the cable can become tangled with itself and/or adjacent components so that subsequent operation of the winching device is impaired.

US-A-4915358, US-A-4059197 and GB-A-1432823 all relate to a gear mechanism for a spare wheel winch.

US-A-4997164 discloses a spare wheel winch in which a plate-like member extends over approximately half of the circumference of a winch cable pulley. In this way, 180° of the pulley channel in which the cable is received is covered by the plate-like member. The remainder of the pulley is left uncovered, so that the winch cable is free to expand to fill the space between the uncovered part of the pulley and the winch housing when the cable is load-free.

EP-A-507032 discloses a frame-like housing in a spare wheel winch, wherein the housing has an approximately 90° arcuate part that is concentric with a cable-receiving channel in the winch pulley. The housing does not, however, close any part of the channel, so that the cable is free to expand to fill the gap between the pulley and the housing when there is no load on the cable. A stop pawl is provided for preventing rotation of the pulley when the cable has been unwound. The pawl is retracted away from the channel during winding and unwinding of the cable, so that the pawl does not function to prevent expansion of the cable when the cable is load-free.

US-E-33303 discloses a spare wheel winch having a pulley comprising two circular, parallel side plates with a smaller circular hub plate clamped therebetween to form a cable-receiving channel between the side plates. A drive shaft is received in aligned central apertures in the plates. A horseshoe-shaped plate is provided, having an inner edge defining part of a circle of slightly smaller diameter than the side plates, and an outer edge complementary to the walls of a shaped casing. The horseshoe-shaped plate is clamped between the side plates and received by a limited amount into the channel, around part of the channel circumference. Approximately a quarter of the channel circumference is left open. The horseshoe-shaped plate has a projection formed at one of its ends for locating a guide block in position, with a slot in the guide block being aligned with part of the open section of the channel to guide the winch cable into the channel.

In the winch disclosed in US-E-33303, expansion of the cable when load-free is limited by the presence of the horseshoe-shaped member in part of the channel, and by a pawl which is biased towards the hub plate for movement in the open section of the channel.

The assembly of the winch of US-E-33303 is complex and involves clamping the hub plate and horseshoe-shaped plate between the side plates, and mounting the cable guide on the horseshoe-shaped plate so that the guide slot is properly aligned with the pulley channel. The combination of locating the pulley on the drive shaft and mounting the horseshoe-shaped plate in the complementary-shaped casing is required in order properly to align the horseshoe-shaped plate in the channel, so that the plate does not completely block the channel.

The assembly is complex, needing skill and is costly.

In addition, only relatively small tolerances between the horseshoe-shaped guide and the adjacent side plates are acceptable, because the space between the horseshoe-shaped guide and the opposed faces of the side plates must be sufficiently large so that the side plates are free to slide over the faces of the guide as the pulley rotates, yet the spaces must not be so small such that the side plates and guide bind during rotation, thereby causing the pulley to stick.

The present invention overcomes the problems with the winch of US-E-33303 by providing a winch as set out in Claim 1, whose pre-characterising part is directed to a winching device comprising a casing having first and second parts secured together by pins, a pulley rotatably mounted in the casing and having a peripheral channel around a hub and defined between channel sidewalls; a cable secured to the pulley for wrapping and unwrapping about the hub within the channel on rotation of the pulley; drive means for rotating the pulley; a shroud and a pawl both mounted in the casing for containing the cable in the channel, the pawl being pivotally biased towards the hub; and a guide for guiding the cable into the channel.

The distinguishing features of the present invention are set out in the characterising part of claim 1, which is characterised in that the shroud is in the form of a sleeve encircling the pulley, the shroud having a cable entry aperture defining the guide and a second aperture receiving the pawl therein, the shroud being located relative to the pawl and the channel by engagement on said pin or one of said pins.

The winching device of the present invention is easily assembled in an operation that involves dropping the shroud into the casing to locate the pin in the hole, followed by dropping the pulley into the shroud to align the channel with the pawl aperture and the cable guide aperture. No separate cable guide member needs to be manufactured and mounted to the shroud, and the outer surface of the shroud need not be complementary to the casing in order to enable the shroud to assist in containing the cable in the channel, it not being possible to completely block the channel with the shroud in the winching device of the present invention.

The pawl may be pivotally mounted to the casing pin and may be engagable with the hub to prevent rotation of the pulley once the cable has been substantially unwrapped therefrom, the pawl having an arcuate surface facing the pulley and forming a continuation of the shroud inner surface.

The shroud is preferably moulded from a synthetic plastics material.

Preferably, the shroud has an inner surface extending over the channel except at said apertures.

A winching device in accordance with the present invention will now be described in greater detail, by way of example, with reference to the accompanying drawings, in which:-
Figure 1 is a front elevation of the winching device;
Figure 2 is a rear elevation of the winching device;
Figure 3 is a diagrammatic exploded view of part of the device;

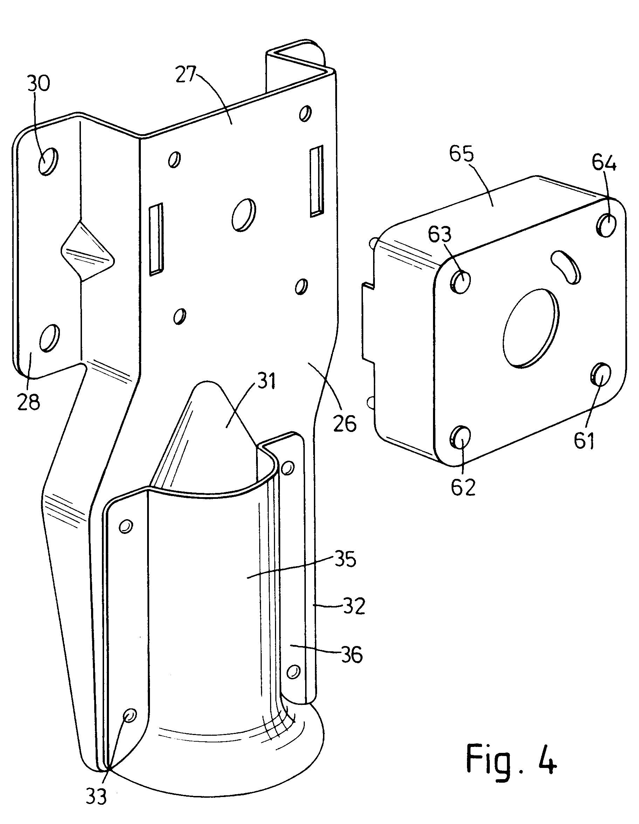

Figure 4 is a perspective view of a support bracket for the device;
Figure 5 is a longitudinal section of part of the device;
Figure 6 is a longitudinal section of the shroud;
Figure 7 is a front elevation of the pulley;
Figure 8 is a cross-sectional view of Figure 7 viewed from the side; and
Figure 9 is a rear elevation of Figure 7.

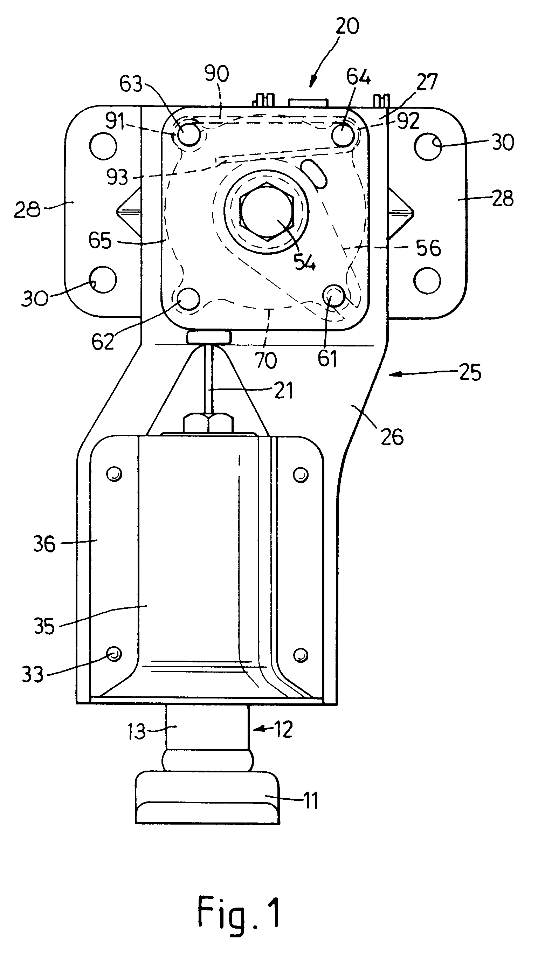

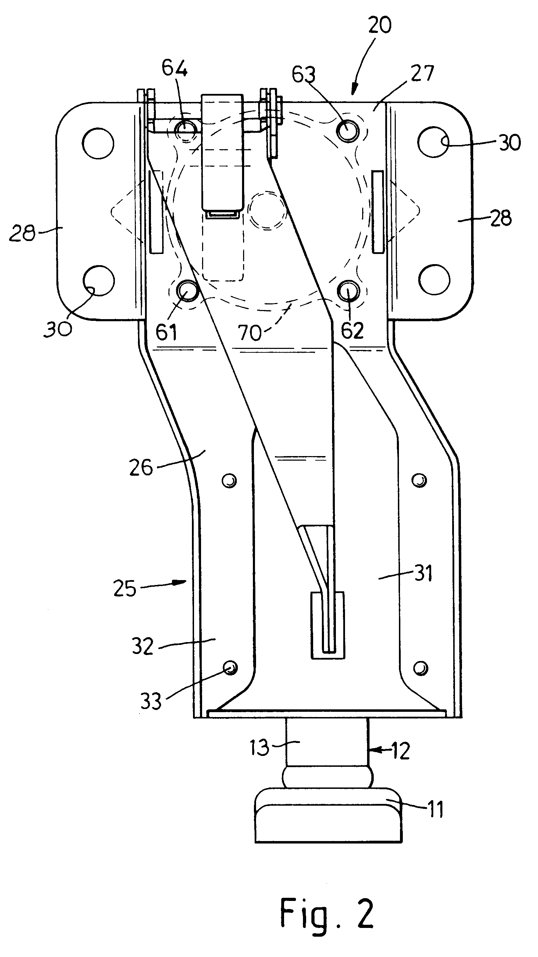

Referring first to Figures 1 and 2, these illustrate part of a wheel engaging plate 11, which is used in conventional manner to bolt to a vehicle spare wheel under the vehicle chassis by means of apertures (not seen). The plate 11 is suspended by a suspension device 12 comprising a hollow tube 13 having an out-turned flange (not seen), from which the plate is suspended. The suspension device 12 includes a stem, within the tube 13, about which is mounted a helical spring under compression between a head on one end of the stem within the tube and an inturned flange at the end of the tube 13 opposite to the plate. The stem extends through the inturned flange and has a further head, which bears on the inturned flange under the force of the spring. A cable 21 extends axially into the stem and is secured within the stem.

A support bracket 25 comprising a plate 26 which has an upper portion 27 formed with offset flanges 28. These flanges are bolted to the vehicle by means of apertures 30. A lower portion of the plate 26 comprises a part-cylindrical housing 31 having flanges 32 provided with apertures for rivets 33.

A cylindrical sleeve is defined by the part-cylindrical housing 31 and a further part-cylindrical member 35 is provided having flanges 36 secured to the flanges 32 of the part-cylindrical housing 31 by the rivets 33.

The cylindrical sleeve 31, 35 receives the suspension device 12. The tube carries an external guide member slidably received in the sleeve 31, 35.

In use, the cable 21 can be raised by a winch 20, described below, so as raise the spare wheel support plate 11 until it abuts formations on a vehicle body. The plate is resiliently urged against the body in view of tension in the cable applied through the spring. The winch can also be used to release this tension, so that the spare wheel support plate 11 is lowered under gravity. During such operation, the tube slides within the sleeve 31, 35.

As so far described, the winching device is similar to that disclosed in GB-A-2251589 the disclosure of which is incorporated herein by reference.

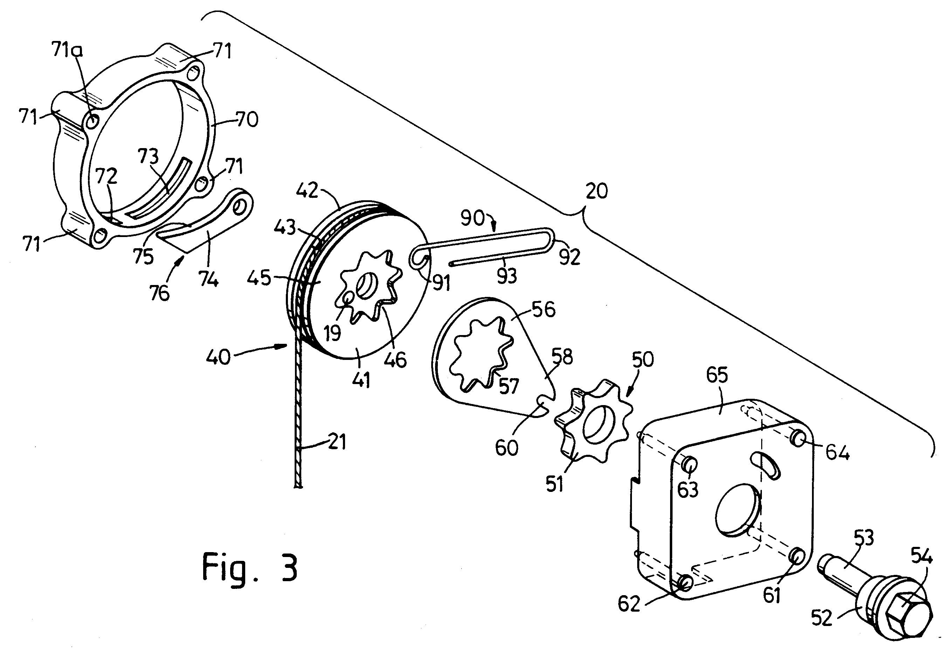

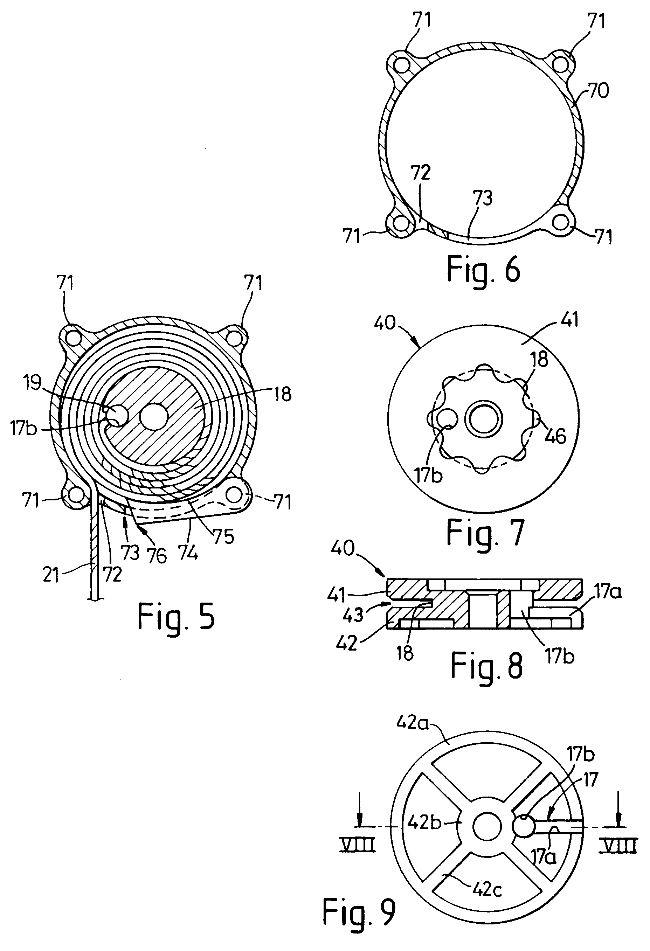

The winch 20 is carried on the upper part 27 of the plate 26 of the support bracket 25. As best seen in Figure 3, the winch includes a metallic pulley 40 of one piece, die-cast construction having first and second sides 41, 42 and a peripheral annular channel 43 around a hub or core 18 the channel being defined between the first and second sides. The side 42 of the pulley 40 has recesses defining a peripheral ring 42a, a hub 42b and four metal ribs 42c interconnecting the ring and the hub (Figure 9). This saves metal and weight.

As shown in Figure 9, the side 42 includes a slot 17a extending through the thickness of the side 42, and a communicating recess 17b which is of larger cross-sectional area than the slot 17a and is in the form of an aperture extending through both sides 41 and 42. Together, the slot 17a and recess 17b form a keyhole-shaped aperture 17 in the side 42 of the pulley.

The cable 21 is fitted at one end with an enlarged cylindrical head or nipple 19 and is attached to the pulley by way of slot 17a which receives the cable, and the aperture of the recess 17b which receives the nipple 19. During assembly, the nipple 19 and cable are dropped into the recess 17b and slot 17a respectively. The recess 17b forms a bearing surface on which the nipple 19 can journal. In order to prevent the cable from coming out of the slot 17a, the cable is moved in the channel 43 and away from the slot 17a as the nipple 19 journals in the recess 17b.

A first gear 45 is formed in the first side 41 of the pulley 40 and has internal gear teeth 46. The pulley 40 is rotatably mounted on a drive or actuating member 53.

The first gear 45 forms part of an eccentric gear mechanism including a second gear 50, having outer gear teeth 51, and rotatably mounted on an eccentric part 52 of the drive member 53. The drive member 53 has an hexagonal head 54 by which, in use of the winch 20, it is rotated to rotate the pulley 40. This eccentric gear mechanism, drive member 53 and hexagonal head 54 are metallic die-cast constructions.

The gear mechanism includes a torque plate 56 having an aperture 57 formed complementary to the second gear 50 and receiving this gear, so that the torque plate is non-rotatably connected to the gear. The torque plate 56 has an arm 58, whose end is formed with an elongate slot 60, extending radially of the second gear 50. The slot 60 engages with a rivet, pin, bolt or the like 61 secured to the support bracket 25.

Rotation of the hub 18 causes rotation of the drive member 53 with accompanying eccentric motion of the eccentric part 52. The torque plate 56 prevents rotation of the second gear 50, so that the first gear 45 is caused to rotate around the second gear 52. This motion causes rotation of the pulley 40 and winding of the cable 21 on the pulley. The torque plate 56 resists rotation of the pulley 40 under the force exerted by tension in the cable 21.

The member 61 is one of four rivets, pins, bolts or the like 61 to 64 used to secure a casing 65 to the bracket 25.

A safety device is also provided. This may be as described in GB-2251589 or as disclosed in copending British Patent Applications Numbers 92227503 and 9302002.2. If the cable 21 is accidentally released, manually or due to vibration, for example, the safety device prevents the suspension device from falling.

As shown most clearly in Figures 1 and 3, a spring 90 is provided. This is a bent wire spring having an eye 91 at one end. The opposite end forms a loop 92 from which a free end portion 93 extends. The eye 91 engages one of the casing rivets, pins or bolts 63 and the loop engages another casing rivet, pin or bolt 64 to hold the spring in position in the casing 65.

The free end portion 93 resiliently engages the torque plate 56 and urges the first gear 45 into mesh with the second gear 50. This arrangement takes up tolerances in the construction and ensures that vibration does not cause any reverse motion of the gears, with consequent release of tension in the winch and release of a spare wheel, in use.

Turning now more specifically to Figures 3 and 5 to 9 of the drawings, the pulley 40 is provided with a shroud 70 which encircles the pulley. The shroud 70 is in the form of a cylinder of a length generally equal to the width of the pulley, and is moulded from a synthetic plastics material. Four equispaced lugs 71 are provided on the shroud 70 and have axial apertures 71a which locate on the respective pins 61 to 64 to retain the shroud in position.

The shroud 70 has a cable entry 72 and a peripheral aperture 73 in which is pivotally mounted a stop pawl 74 peripheral. The pawl 74 is pivotally mounted on one of the pins 61 with a torsion spring (not shown) which biases the pawl to engage the hub 18 within the channel 43 to prevent rotation of the pulley once the cable has been substantially unwrapped therefrom. The pawl 74 is engageable with the casing 65 to limit the movement of the pawl away from the pulley hub 18. The pawl 74 has an arcuate surface 75 facing the cable and forming a continuation of the shroud inner surface when in the limit position. A point 76 on the pawl engages the casing 65 when the winch is assembled to prevent the pawl from being pushed by the cable 21 beyond the position shown in Figure 5 so that no part of the cable can expand beyond the confines of the shroud 70.

When the cable 21 is fully or partially wound onto the pulley 40 and is not under load, the turns of the cable tend to expand and if left uncontrolled can become entangled which can impair the operation of the winch 20. With the shroud 70, the cable is contained wholly within the confines of the pulley 40 around the full periphery of the latter as the pawl 74 effectively closes the aperture 73.

When the cable 21 has been substantially unwound from the pulley 40, the pawl will enter channel between the sides 41, 42 of the pulley and engage an indentation (not shown) in the hub 18 of the pulley to prevent further rotation of the latter.

As already mentioned, the pulley 40 is a one-piece construction, as is the eccentric mechanism and drive member 53. The former reduces a previous 11-part component to one, and the latter a two-part and three-part component to one, both with a significant reduction in cost and assembly time. In addition, backlash is eliminated in the one-piece eccentric mechanism and drive member.

## Claims

1. A winching device comprising a casing having first and second parts (65,27) secured together by pins (61-64), a pulley (40) rotatably mounted in the casing and having a peripheral channel (43) around a hub (18) and defined between channel sidewalls (41,42); a cable (21) secured to the pulley for wrapping and unwrapping about the hub (18) within the channel on rotation of the pulley; drive means (45,46,50,51,53) for rotating the pulley; a shroud (70) and a pawl (74) both mounted in the casing for containing the cable in the channel, the pawl being pivotally biased towards the hub; and a guide (72) for guiding the cable into the channel, characterised in that the shroud (70) is in the form of a sleeve encircling the pulley (40), the shroud having a cable entry aperture (72) defining the guide and a second aperture (73) receiving the pawl (74) therein, the shroud being located relative to the pawl (74) and the channel (43) by engagement on said pin or one of said pins (61-64).

2. A winching device according to claim 1 wherein the pawl is pivotally mounted to said pin or one of sid pins (61-64).

3. A winching device according to claim 1 or 2, wherein the pawl is engagable with the hub (18) to prevent rotation of the pulley once the cable has been substantially unwrapped therefrom.

4. A winching device according to any preceding claim, wherein the pawl (74) is engageable with the casing (65) to limit the movement of the pawl away from the pulley hub (18).

5. A winching device according to claim 4, wherein, in said limit position, the pawl (74) has an arcuate surface (75) facing the cable and forming a continuation of the shroud inner surface.

6. A device according to any preceding claim, wherein the shroud is moulded from a synthetic plastics material.

7. A device according to any preceding claim, wherein the pulley (40) is a one-piece construction and has a recess (17b) extending through both sidewalls (41,42), at least one of the sidewalls including a slot (17a) communicating with the recess (17b), the recess having a larger cross-sectional area than the slot, the slot receiving the cable and the recess journally receiving a nipple (19) attached to the cable.

## Patentansprüche

1. Hebevorrichtung mit einem einen ersten Teil und einen zweiten Teil (65, 27) aufweisenden Gehäuse, die durch Niete, Bolzen oder dgl. (61 - 64) zusammengehalten sind, mit einer Seilscheibe (40), die drehbar in dem Gehäuse angeordnet ist und eine über den Umfang durchgehende Nut (43) um einen Kern (18) und zwischen Seitenwänden (41, 42) gebildet aufweist, mit einem an der Seilscheibe befestigten Drahtseil (21) zum Auf- und Abwickeln um den Kern (18) in der Nut durch Drehen der Seilscheibe, mit einem Antrieb (45, 46, 50, 51, 53) für das Drehen der Seilscheibe, mit einem Deckelring (70) und einer Sperrklinke (74), die beide in dem Gehäuse angeordnet sind, um das Drahtseil in der Nut zu halten, wobei die Sperrklinke in Richtung auf den Kern schwenkbar belastet ist, und mit einer Führung (72) für das Drahtseils in der Nut, **dadurch gekennzeichnet**, daß der Deckelring (70) in Gestalt einer Hülse die Seilscheibe (40) umgibt, und daß der Deckelring einen die Führung bildenden Seildurchtritt (72) und eine zweite Umfangsöffnung (73) zur Aufnahme der Sperrklinke (74) aufweist, wobei der Deckelring relativ zu der Sperrklinke (74) und der Nut (43) auf dem Niet oder auf einem der Niete, Bolzen oder dgl. (61 - 64) angeordnet ist.

2. Hebevorrichtung nach Anspruch 1, **dadurch gekennzeichnet**, daß die Sperrklinke schwenkbar auf dem Niet oder auf einem der Niete, Bolzen oder dgl. (61 - 64) gelagert ist.

3. Hebevorrichtung nach Anspruch 1 oder 2, **dadurch gekennzeichnet**, daß die Sperrklinke mit dem Kern (18) in Kontakt kommt, um die Drehung der Seilscheibe zu verhindern, sobald das Drahtseil im wesentlichen davon abgewickelt ist.

4. Hebevorrichtung nach einem der vorangehenden Ansprüche, **dadurch gekennzeichnet**, daß die Sperrklinke (74) mit dem Gehäuse (65) in Kontakt kommt und die Bewegung der Sperrklinke von dem Kern (18) der Seilscheibe weg begrenzt.

5. Hebevorrichtung nach Anspruch 4, **dadurch gekennzeichnet**, daß die Sperrklinke (74) eine bogenförmige, dem Drahtseil zugekehrte Oberfläche (75) für die Sperrstellung aufweist und die Fortsetzung der inneren Oberfläche des Deckelrings bildet.

6. Hebevorrichtung nach einem der vorangehenden Ansprüche, **dadurch gekennzeichnet**, daß der Deckelring als Kunststoff-Spritzteil ausgebildet ist.

7. Hebevorrichtung nach einem der vorangehenden Ansprüche, **dadurch gekennzeichnet**, daß die Seilscheibe (40) einstückig ausgebildet ist und eine Verankerungsausnehmung (17b) aufweist, die sich durch beide Seitenwände (41, 42) erstreckt, wobei zumindest eine der Seitenwände einen an die Verankerungsausnehmung (17b) anschließenden Schlitz (17a) aufweist, der Querschnitt der Verankerungsausnehmung größer als der Querschnitt des Schlitzes ausgebildet ist und der Schlitz das Drahtseil und die Verankerungsausnehmung schwenkbar einen an dem Drahtseil befestigten Nippel (19) aufnimmt.

## Revendications

1. Treuil comprenant un boîtier ayant des première et deuxième parties (65, 27) fixées ensemble par des tiges (61 à 64), une poulie (40) montée tournante dans le boîtier et ayant un canal périphérique (43), réalisé autour d'un moyeu (18) et défini entre des parois latérales de canaux (41, 42); un câble (21) fixé à la poulie en vue d'être enroulé et déroulé autour du moyeu (18) à l'intérieur du canal, lors de la rotation de la poulie ; des moyens d'entraînement (45, 46, 50, 51, 53) servant à faire tourner la poulie; un capotage (70) et un cliquet (74), tous deux montés dans le boîtier afin de contenir le câble dans le canal, le cliquet étant déplacé à pivotement vers le moyeu; et un guide (72) servant à guider le câble dans le canal, caractérisé en ce que le capotage (70) se présente sous la forme d'un manchon entourant la poulie (40), le capotage ayant une ouverture d'entrée de câble (72) définissant le guide et une deuxième ouverture (73) logeant le cliquet (74), le capotage étant disposé par rapport au cliquet (74) et au canal (43), par un engagement sur ladite tige ou l'une desdites tiges (61 à 64).

2. Treuil selon la revendication 1, dans lequel le cliquet est monté pivotant sur ladite tige ou l'une desdites tiges (61 à 64).

3. Treuil selon la revendication 1 ou 2, dans lequel le cliquet peut s'engager contre le moyeu (18) afin d'empêcher toute rotation de la poulie une fois que le câble a été sensiblement déroulé de cette dernière.

4. Treuil selon l'une quelconque des ;revendications précédentes, dans lequel le cliquet (74) peut s'engager contre le boîtier (65), afin de limiter l'écartement du cliquet depuis le moyeu de poulie (18).

5. Treuil selon la revendication 4, dans lequel, dans ladite position limite, le cliquet (74) présente une surface arquée (75) tournée vers le câble et formant un prolongement de la surface intérieure de capotage.

6. Treuil selon l'une quelconque des revendications précédentes, dans lequel le capotage est moule en matière plastique synthétique.

7. Treuil selon l'une quelconque des revendications précédentes, dans lequel la poulie (40) est une construction monobloc et présente une cavité (17b) traversant les deux parois latérales (41, 42), au moins l'une des parois latérales comprenant une fente (17a) communiquant avec la cavité (17b), la cavité ayant une plus grande aire de section transversale que la fente, la fente logeant le câble et la cavité logeant à rotation un raccord (19) fixé au câble.
